# EUROPEAN PATENT APPLICATION

(11) **EP 1 964 760 A1**
(43) Date of publication of application: **03.09.2008**
(21) Application number: 08003755.9
(22) Date of filing: 29.02.2008
(51) Int. Cl.: B62K 21/26, B62K 23/06

(54) **Control device for a bicycle and bicycle comprising such a device**

(30) Priority: 01.03.2007 IT MI20070401
(71) Applicant: CAMPAGNOLO S.r.l., 36100 Vicenza (VI) (IT)
(72) Inventor: Dal Pra', Giuseppe, 36010 Zanè (Vicenza) (IT); De Perini, Bruno, 36075 Montecchio Maggiore (VI) (IT)
(74) Representative: Castiglia, Paolo

(57) **Abstract**

A control device (1) for a bicycle, comprises a main body (2) adapted to be associated with a bicycle handlebar and at least one control member (30, 50, 60) of at least one bicycle equipment, like for example a brake, a derailleur or a cyclecomputer. The main body (2) comprises a first side wall (4) and a second side wall (5) arranged on the opposite side to the first side wall (4) with respect to an intermediate reference plane (P). The first side wall (5) comprises a first portion (22) having a first surface (12) and a second portion (21) having a second surface (11). The first surface (12) has an area (12') having a distance from the intermediate reference plane (P) greater than the distance between the aforementioned intermediate reference plane (P) and an area (11') of the surface (11) of the second portion (21).

## Description

The present invention relates to a control device for a bicycle. In particular, the invention relates to a control device used to ride a bicycle and to actuate/control at least one bicycle equipment, like for example a derailleur (front or rear), a brake (for the front or rear wheel), a servo-assisted gearshift or a cyclecomputer.

More specifically, the control device of the present invention is adapted to be used in a racing bicycle, i.e. in a bicycle the handlebar of which has opposite curved free end portions.

The invention also relates to a bicycle comprising the aforementioned control device.

The invention further relates to a kit of parts for the assembly of the aforementioned control device.

Known control devices for racing bicycles are associated with the curved portions of the handlebar of the bicycle, one on the right and one on the left, to allow the cyclist to grip it to ride the bicycle, as an alternative to the grip on the classical grip provided on the curved portions of the handlebar, and to allow simultaneous actuation/control of one or more equipments of the bicycle, like for example a brake (front or rear), a derailleur (front or rear) and possibly a cyclecomputer.

Throughout the present description and in the subsequent claims, the spatial terms, in particular the terms front, rear, side, upper, lower, vertical and horizontal, are used with reference to the mounted condition of the control device on the handlebar of the bicycle. The terms inner and outer, on the other hand, with reference to the handlebar in neutral position, identify the area towards the centre of the handlebar and the area opposite the centre of the handlebar with respect to an intermediate reference plane that substantially vertically crosses the control device.

Known control devices are for example described and illustrated in EP 504 118 and EP 1 264 765 to the same Applicant.

Known control devices typically comprise a support body adapted to be fixed to the curved portions of the handlebar through conventional connection means, for example through a clip.

The support body is typically defined by an outer side wall, an inner side wall substantially parallel to the outer side wall, an upper wall which connects the outer side wall and the inner side wall to each other and a lower wall opposite the upper wall. All the walls are typically covered by an outer sheath.

The support body is mounted on the handlebar of the bicycle so as to project ahead from it and it is shaped so as to make it easier for the cyclist to grip it in particular racing situations. Therefore, it has an ergonomic shape, typically comprising an upward projection in the front area thereof.

One or more control members of a respective equipment of the bicycle are associated with the support body. Such control members generally consist of levers and/or buttons. In particular, control devices comprising a brake actuation lever and levers, or buttons, for actuating a derailleur and possibly for controlling a cyclecomputer are known. Typically, levers or buttons for actuating the derailleur in a gearshifting direction, and possibly for controlling the cyclecomputer, are provided on the inner side wall of the support body of the control device.

The Applicant has found in control devices of the type described above the drawback of not ensuring a safe and efficient grip for the cyclist, above all during particularly hard race situations, like climbing or sprinting. This drawback is essentially caused by the particular configuration of the support body, which, as already stated, has substantially parallel opposite side walls, outer and inner.

In the aforementioned race situations, indeed, the cyclist which rides the bicycle gripping the support body of the control device, rests most of the palm of his hand on the upper transversal wall, close to the projection, and on the outer side wall of the support body, whereas the fingers, the thumb from the top and the other fingers from below, squeeze the support body exerting a pressure on the inner side wall thereof according to a direction substantially perpendicular to such a surface.

Above all in the case of cyclist with large hands, the ends of the fingers can overlap at the inner side wall of the support body, with the thumb going over the other fingers or vice-versa. This overlapping of fingers results in a grip of the support body that is not very efficient or comfortable.

Moreover, in the case in which there is a derailleur actuation lever on the inner side wall of the support body, when the cyclist actuates this lever with his thumb it can knock against the ends of the other fingers. In these circumstances an uncomfortable condition for the cyclist occurs, with a consequent loss of efficiency of the grip.

The technical problem forming the basis of the present invention is to allow the cyclist to have a comfortable and efficient grip of the support body of a control device for a bicycle in all race situations, even the most hard ones, and irrespective of the size of his hand.

The invention therefore relates, in a first aspect thereof, to a control device for a bicycle, comprising a main body adapted to be associated with a bicycle handlebar and at least one control member of at least one bicycle equipment, said main body comprising an outer side wall and an inner side wall arranged on the opposite side to said outer side wall with respect to an intermediate reference plane, characterised in that at least one from said outer side wall and said inner side wall comprises a first portion having a first surface and a second portion having a second surface, wherein the first surface has at least one area having a distance from said intermediate reference plane greater than the distance between said intermediate reference plane and an area of the second surface.

Throughout the present description and in the subsequent claims, the expression "intermediate reference plane", is used to indicate any substantially vertical plane that passes through the main (or support) body of the control device, not necessarily a plane of symmetry or a middle plane of such a main body.

Advantageously, the fact that the main body of the control device of the present invention has been shaped so that an area of the surface of a portion of a side wall thereof is farther from an intermediate reference plane with respect to an area of the surface of a different portion of side wall allows the rest surface for the cyclist's hand to be increased and, consequently, allows the possibility of overlapping of the fingers to be reduced. In this way a more efficient and comfortable grip can be obtained compared to what occurs with known control devices. This is also the case in the hard race conditions, like climbing or sprinting, and also in the case of cyclists with particularly large hands.

Preferably, the main body comprises an intermediate surface between the surface of the first portion of side wall and the surface of the second portion of side wall.

Preferably, the surface of the first portion of side wall and the intermediate surface define an enlargement of the main body that has an extension, in a direction from the bottom towards the top, greater than the extension of the surface of the second portion of side wall.

Preferably, the aforementioned first portion of side wall is defined at a lower part of the main body and the aforementioned second portion of side wall is defined at an upper part of the main body. The increase in finger rest surface therefore, advantageously, occurs at the portion of side wall on which the fingers of the cyclist's hand rest.

Even more preferably, the surface of the aforementioned first portion of side wall and the surface of the aforementioned second portion of side wall are defined on the inner side wall of the main body. The increase in the finger rest surface therefore, advantageously, occurs precisely at the side wall of the main body on which the ends of the fingers of the cyclist's hand rest.

Nevertheless an embodiment of the device of the present invention is provided in which the surface of the aforementioned first portion of side wall and the surface of the aforementioned second portion of side wall are defined on the outer side wall of the main body. Also in this way, there is in any case an increase in the rest surface for the cyclist's hand, and therefore an improvement in grip, compared to conventional devices.

In a particularly preferred embodiment of the control device of the present invention, the surface of the first portion of side wall is inclined by at least one predetermined angle with respect to the intermediate reference plane. Preferably, the surface of the first portion of side wall goes away from the intermediate reference plane as one moves along the portion of side wall from the first portion to the second portion.

Advantageously, in this way a very efficient grip is achieved. This is essentially due to the fact that the grip on the main body of the control device of the present invention takes place with the fingers of the cyclist's hand squeezing the support body pressing according to a more comfortable direction.

Preferably, the aforementioned angle is between 20° and 60°. More preferably, the aforementioned angle is between 30° and 50°, and even more preferably is substantially equal to 40°.

In a specific embodiment of the control device of the present invention, the surface of the first portion of side wall is substantially parallel to the intermediate reference plane. In accordance with the present invention, such a surface, in at least one area thereof, is in any case far away from the intermediate reference plane more than an area of the surface of the second portion of side wall. The latter can be substantially parallel to the intermediate reference plane. The main body of the control device of the present invention therefore, in such a case, has a portion of side wall (preferably the one defined at the upper part of the main body) substantially identical to the corresponding portion of side wall of the control devices described above with reference to the prior art.

In a further specific embodiment of the control device of the present invention, the main body comprises, preferably, on the opposite side to the first portion of side wall with respect to the intermediate reference plane, at least one enlargement. Also in this case there is an increase in the rest surface of the cyclist's hand, with a consequent improvement of the grip.

Preferably, the aforementioned first portion of side wall is made in one piece with the aforementioned main body.

Nevertheless, an embodiment is provided wherein the first portion of side wall is made in a distinct piece from the main body.

In this last case, the first portion of side wall is preferably removably associated with the main body, for example through a snap coupling, or through screws, or possibly through glue.

In an embodiment of the control device of the present invention, the first portion of side wall is associated with the main body at respective coupling surfaces having a matching shape and is kept in abutment against the main body by an outer coating sheath.

In a further embodiment of the control device of the present invention, the first portion of side wall is able to be adjustably positioned with respect to the main body and the control device comprises an adjustment member of the relative position between the first portion of side wall and the main body. In this way it is possible to adapt any conventional control device to the size of the cyclist's hand so that the aforementioned problems of overlapping the fingers and of possible knocking against the fingers other than the thumb by a possible derailleur actuation lever do not occur.

In a further embodiment of the control device of the present invention, the surface of the first portion of side wall is defined on a finger rest element projecting canti-levered from said first portion of side wall and inclined with respect to said intermediate reference plane by a predetermined angle.

In this case, preferably, the finger rest element is made in one piece with the first portion of side wall, but alternatively it can be made in a distinct piece from the aforementioned first portion of side wall and it can be associated, possibly removably, with the first portion of side wall so as to take up different operative positions. Irrespective of the way in which the finger rest element is associated with the first portion of side wall, means can be provided for adjusting the angular position of the aforementioned finger rest element with respect to the intermediate reference plane, so as to allow the cyclist to modify the grip on the main body of the control according to his own needs.

In all the embodiments of the control device of the present invention described above, said at least one control member of at least one bicycle equipment comprises a brake actuation member.

Preferably, the brake actuation member comprises a brake cable actuation lever, but alternatively it can comprise an electrically or hydraulically commanded brake actuation button.

Moreover, in the preferred embodiment thereof, the control device of the present invention also comprises a first derailleur actuation member in a first gearshifting direction and a second derailleur actuation member in a gearshifting direction opposite the aforementioned first gearshifting direction.

The aforementioned first and second derailleur actuation members can both comprise a derailleur actuation lever or button. In the preferred embodiment of the control device of the present invention, a lever to actuate the derailleur in a first gearshifting direction and a button to actuate the derailleur in the opposite gearshifting direction are provided.

In the preferred embodiment thereof, the control device of the present invention further comprises at least one control member of a cyclecomputer.

Preferably, said at least one cyclecomputer control member comprises at least one button for interacting with the cyclecomputer.

In the preferred embodiment of the control device of the present invention, the main body therefore comprises a body portion in which an area is defined that comprises both a derailleur actuation button and a button for interacting with the cyclecomputer. In this case, the first portion of side wall extends on the main body for at least one portion of length at least equal to the length of the aforementioned area.

In this case, preferably, the surface of the first portion of side wall has, with respect to the intermediate reference plane, a first inclination at the derailleur actuation button and a second inclination, different to the first, at the button for interacting with the cyclecomputer.

Preferably, the first inclination is greater than the second inclination.

In a second aspect thereof, the present invention relates to a bicycle comprising the control device described above.

Preferably, such a bicycle has all of the structural and functional characteristics discussed above with reference to the control device of the present invention individually or in combination and therefore has all of the aforementioned advantages.

In a third aspect thereof, the present invention relates to a kit of parts for the assembly of a control device for a bicycle, comprising a main body adapted to be associated with a bicycle handlebar and provided with at least one control member of at least one bicycle equipment, and at least two finger rest elements adapted to be selectively associated with the main body, wherein said at least two finger rest elements each comprise a portion of side wall the surface of which, when the finger rest element is associated with the main body, has at least one area having a distance from an intermediate reference plane greater than the distance between the intermediate reference plane and an area of a surface of a second portion of said side wall, in which such a distance is different according to whether one finger rest element or another finger rest element of said at least two finger rest elements is used.

Advantageously, the aforementioned kit of parts allows the cyclist to adapt the control device to the size of his own hand so that the aforementioned problems of overlapping the fingers and of possible knocking against the fingers other than the thumb by a possible derailleur actuation lever do not occur.

Further characteristics and advantages of the control device of the present invention shall become clearer from the following detailed description of some preferred embodiments thereof, made with reference to the attached drawings. In such drawings:
- figure 1 is a schematic front view of a first embodiment of a control device according to the present invention;
- figure 2 is a side view of the device of figure 1;
- figure 3 is a perspective view of the device of figure 1;
- figures 4 and 5 are respective sectional views along the planes S₁ and S₂ of figure 2;
- figure 6 is a schematic front view of a second embodiment of a control device according to the present invention;
- figure 7 is a schematic front view of a third embodiment of a control device according to the present invention;
- figure 8 is a side view of a fourth embodiment of a control device according to the present invention;
- figure 9 is a schematic front view of a fifth embodiment of a control device according to the present invention;
- figure 10 is a schematic front view of a sixth embodiment of a control device according to the present invention;
- figures 11a, 11b and 11c represent rear sectional views of three further alternative embodiments of the control device of the present invention;
- figures 12a and 12b represent rear sectional views of two further alternative embodiments of the control device of the present invention.

The following description is made with reference to a right control device, i.e. a control device adapted to be associated with the handlebar of the bicycle at the curved end portion of the handlebar that, looking at the handlebar in the neutral position thereof and from a point of view like that of the cyclist during travel, is to the right of the cyclist. However, it is clear that what has been said has analogous application in the case of a left control device.

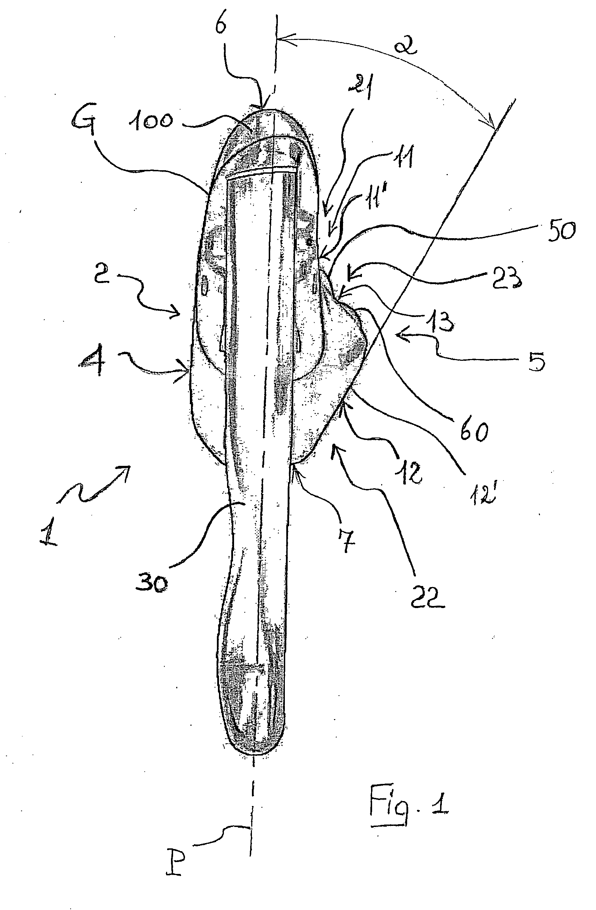

In figures 1-5, a control device in accordance with the present invention is indicated with 1.

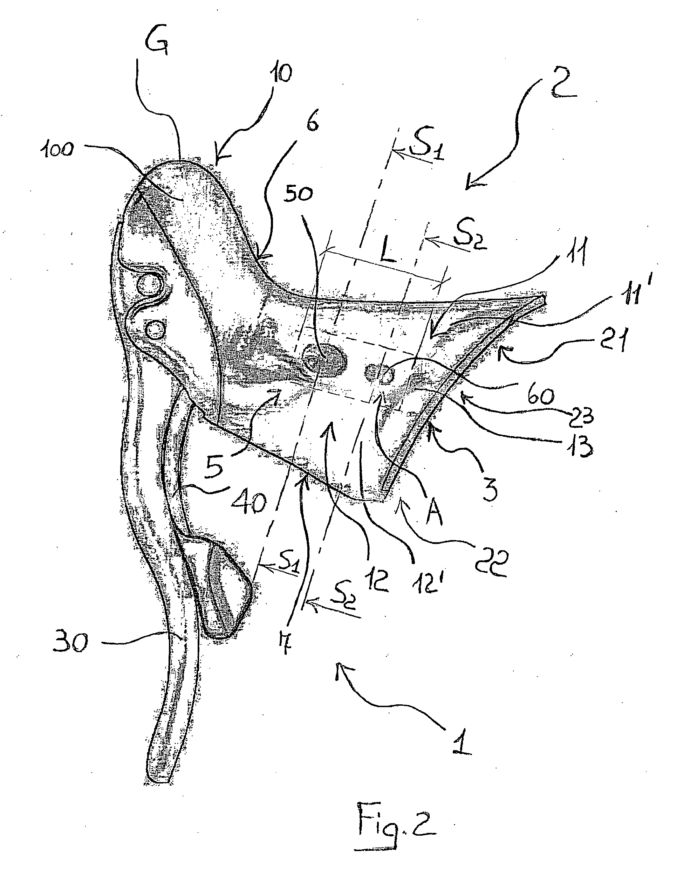

The control device 1 comprises a main body 2 (or support body) adapted to be fixed, at a rear surface 3 thereof (figure 2), to a curved end portion of handlebar (not illustrated) of a racing bicycle, so as to project ahead from said handlebar to be gripped by the cyclist in particular racing situations, like for example climbing or sprinting.

The attachment of the main body 2 onto the handlebar of the bicycle takes place through conventional connection means (not illustrated), like for example a clip.

The main body 2 is defined, as well as by the rear surface 3, by an outer side wall 4, an inner side wall 5 arranged on the opposite side to the outer side wall 4 with respect to an intermediate reference plane P that vertically passes through the main body 2, an upper transversal wall 6 which connects the outer side wall 4 and inner side wall 5 together and a lower transversal wall 7 opposite the upper transversal wall 6.

All the walls of the main body 2 are covered by an outer coating sheath G.

The main body 2 is shaped so as to make it easier for the cyclist to grip it. Therefore, it has, in a front portion 10 thereof, an upward projection 100. The upper wall 6 of the main body 2 therefore has a substantially saddle-shaped profile, as illustrated in figure 2.

The outer side wall 4 of the main body 2 has a surface substantially parallel to the intermediate reference plane P, apart from small convexities and roundings.

The inner side wall 5 has an upper portion 21 at an upper part of the main body 2 and a lower portion 22 at a lower part of the main body 2.

The upper portion 21 has a surface 11 substantially parallel to the intermediate reference plane P, and therefore to the surface of the outer side portion 4, again apart from small convexities and roundings. The lower portion 22, on the other hand, has a surface 12 that is inclined by an angle α with respect to the plane P. Between the surface 11 of the upper portion 21 and the surface 12 of the lower portion 22 an intermediate surface 13 is defined. Such an intermediate surface 13 is therefore defined at an intermediate portion 23 of the inner side wall 5 of the main body 2, such an intermediate portion 23 being defined between the upper portion 21 and the lower portion 22 of the inner side wall 5.

The orientation of the surface 12 of the lower portion 22 of the inner side wall 5 is such that the surface 12 goes away from the intermediate reference plane P (and therefore from the outer side wall 4) as one moves along the inner side wall 5 from the lower portion 22 to the upper portion 21, i.e. from the bottom towards the top.

The angle α of inclination can be selected within the range of values between 20° and 60°.

In the preferred embodiment of the control device 1 of the present invention, the angle α is in any case within the range of values between 30° and 50°, and preferably is substantially equal to 40°.

The orientation of the intermediate surface 13, on the other hand, is such that the surface 13 goes towards the intermediate reference plane P (and therefore the outer side wall 4) as one moves along the inner side wall 5 from the lower portion 22 to the upper portion 21.

The profile of the surface of the side wall 5 of the main body 2 of the control device 1 illustrated in figures 1-5 is therefore such that the distance between an area 12' of the surface 12 of the lower portion 22 of the inner side wall 5 and the intermediate reference plane P is greater than the distance between an area 11' of the surface 11 of the upper portion 21 of the inner side wall 5 and the intermediate reference plane P. In other words, the surface 12 of the lower portion 22 of the inner side wall 5 of the main body 2 has, in at least one area 12' thereof, a distance from the intermediate reference plane P (and therefore from the outer side wall 4) greater than an area 11' of the surface 11 of the upper portion 21 of the inner side wall 5. The main body 2 therefore has, at the lower part thereof, a thickness greater than that at the upper part thereof.

Moreover, the surface 12 of the lower portion 22 of the side wall 5 and the intermediate surface 13 define an enlargement of the main body 2 that has, in a direction from the bottom towards the top, an extension greater than the extension of the surface 11 of the upper portion 21 of the side wall 5.

The control device 1 comprises, at the front portion 10 of the main body 2, a brake cable actuation lever 30. The lever 30 is hinged to the main body 2 at the upper part of the main body 2 in a totally conventional way.

The control device 1 further comprises a lever 40 (figure 2) for actuating a derailleur (in particular a rear derailleur) in a first gearshifting direction. The lever 40 is arranged rearwardly with respect to the brake lever 30 and is articulated to the main body 2 in a totally conventional way.

The control device 1 further comprises, at the intermediate surface 13 defined on the inner side wall 5 of the main body 2, a button 50 for actuating the aforementioned derailleur in a second gearshifting direction opposite the first gearshifting direction, and a button 60 for controlling/interacting with a cyclecomputer.

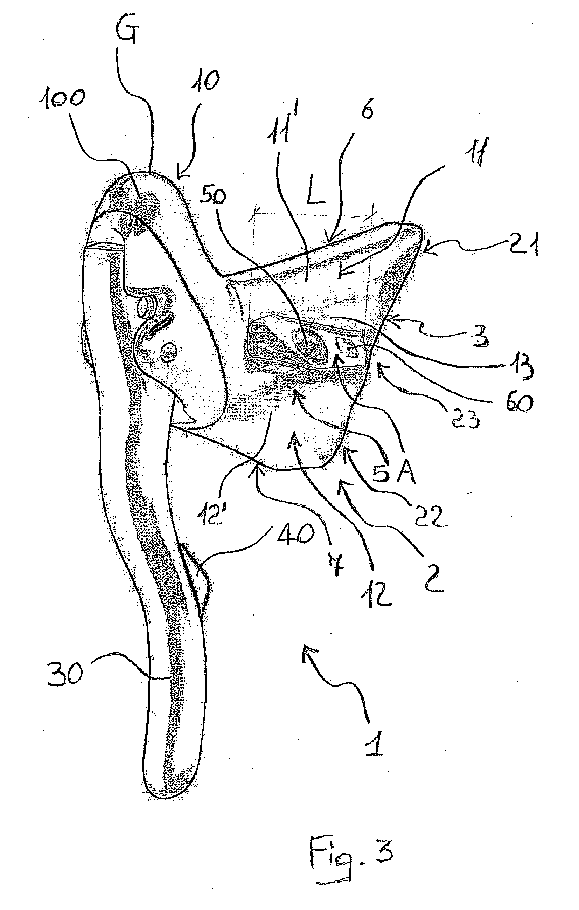

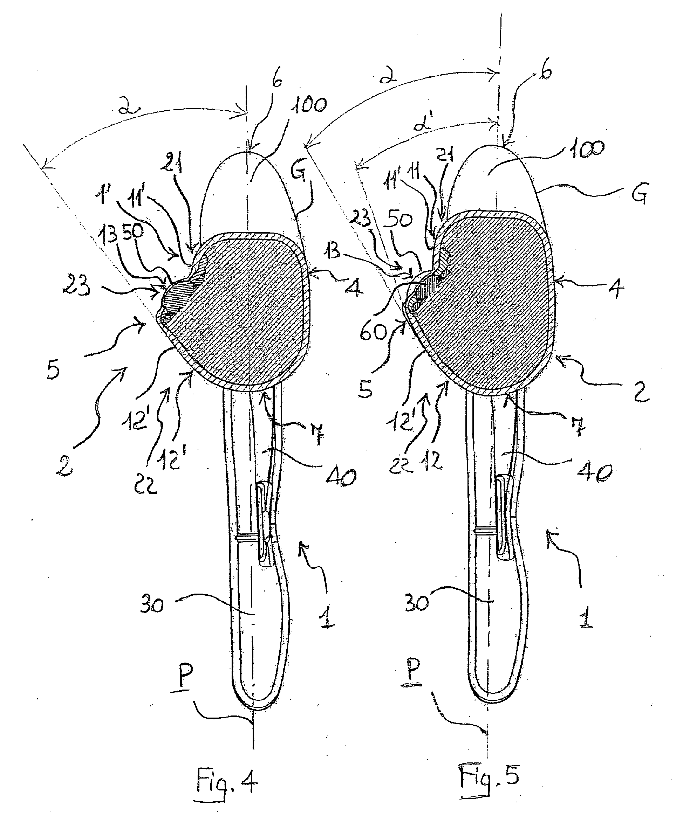

As can be seen in figures 2 and 3, the buttons 50 and 60 are provided at a button actuation area A (indicated with a broken line in figure 2 and with a solid line in figure 3) defined in the intermediate portion 23 of the inner side wall 5. The surface 12 of the lower portion 22 of the inner side wall 5 of the main body 2 extends between the front portion 10 and the rear surface 3 of the main body 2 for a portion having a length at least equal to the length L of the button actuation area A. In particular, as shown in figures 4 and 5, the angle of inclination α of the surface 12 of the lower portion 22 of the inner side wall 5 at the button 50 is slightly greater than the angle of inclination α' of the surface 12 of the lower portion 22 of the inner side wall 5 at the button 60. For example, if α is equal to about 40°, α' is equal to about 35°.

When the cyclist grips the main body 2, part of the palm of his hand rests upon the upper transversal wall 6 and part upon the outer side wall 4. The fingers of the hand, meanwhile, rest upon part of the outer side wall 4, upon the lower transversal wall 7 and upon the inner side wall 5. The thumb embraces from the top the main body 2 resting upon the surface 11 of the upper portion 21 or upon the intermediate surface 13 of the intermediate portion 23, whereas the other fingers embrace from the bottom the main body 2 with their ends resting upon the surface 12 of the lower portion 22 of the inner side wall 5. The contact of the ends of these fingers on the surface 12 of the lower portion 22 of the inner side wall 5 of the main body 2 advantageously allows a safer and more efficient grip than what occurs in control devices of the prior art in which the inner side wall is parallel to the outer side wall along the entire extension thereof. Moreover, when the cyclist's hand grips the main body 2, the increase in finger rest surface caused by the inclination of the surface 12 of the lower portion 22 of the inner side wall 5 (and therefore by the fact that it is at a distance from the intermediate reference plane P greater than in the case of devices of the prior art), prevents the ends of the fingers from interfering with the thumb and possibly accidentally actuating the buttons 50 and 60 arranged on the intermediate portion 23 of the inner side wall 5 of the main body 2.

The control device 1 described above is particularly suitable for being used in those cases in which the lever 40 and the button 50 act upon respective switches arranged inside the main body 2 to activate an electronic device that controls the derailleur in the two opposite gearshifting directions.

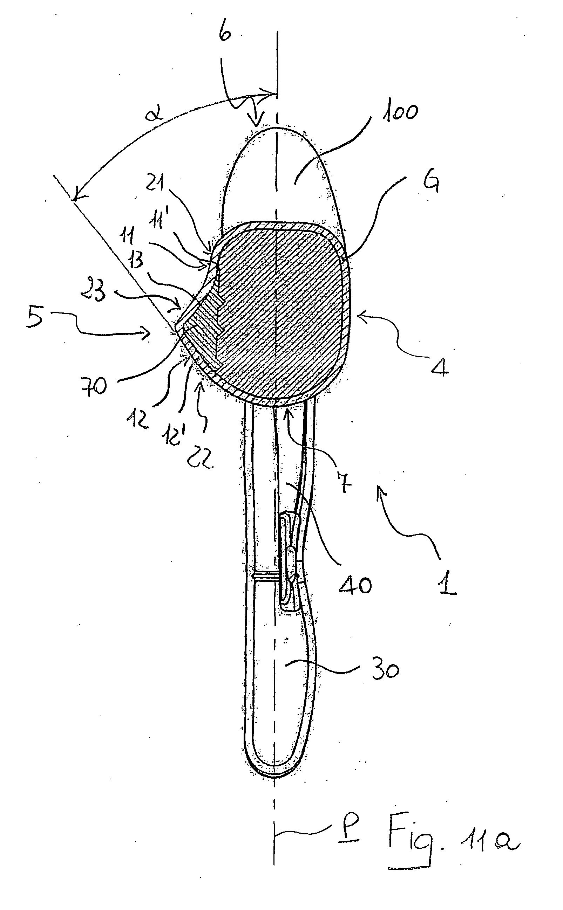

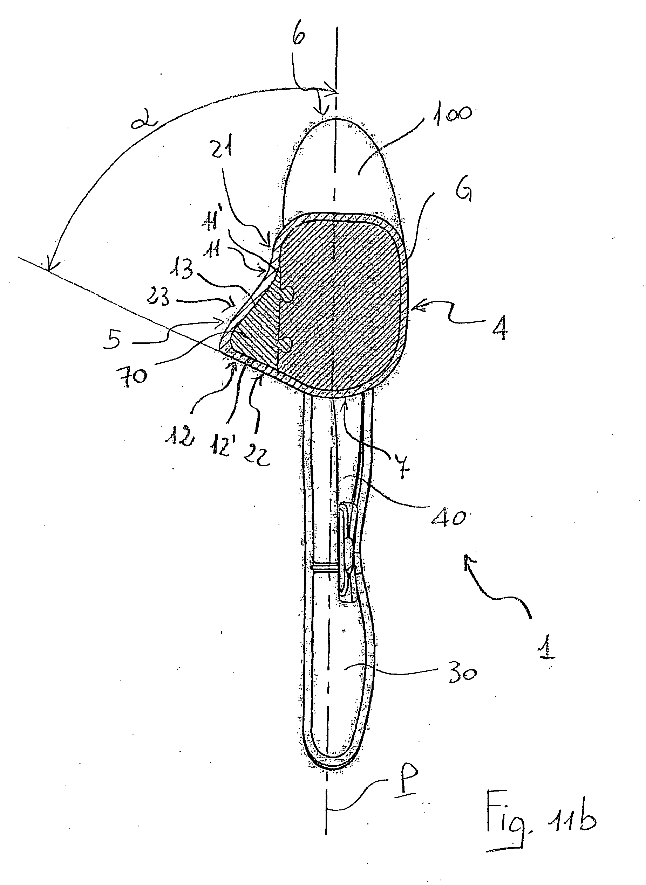

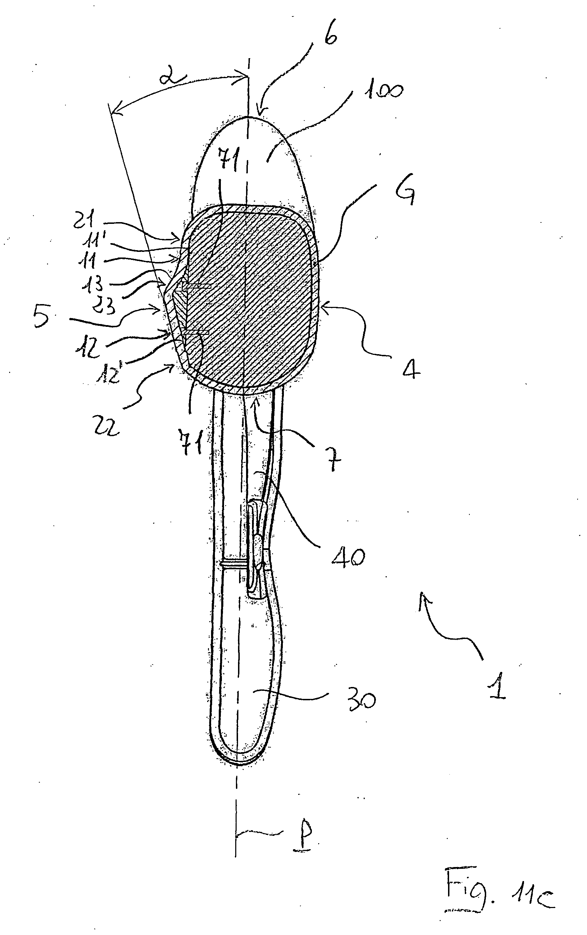

In the embodiment of the control device 1 described above and illustrated in figures 1-5, the lower portion 22 and the upper portion 21 of the inner side wall 5 of the main body 2 are made in a single piece with the main body 2. Nevertheless, alternative embodiments are provided, illustrated in figures 11a, 11b and 11c, in which the lower portion 22 and the intermediate portion 23 of the inner side wall 5 of the main body 2 are made in a distinct piece (in particular, the element indicated in the figures with 70) from the main body 2, such a piece being associated, possibly removably, with the main body 2.

In figures 11a, 11b and 11c, elements corresponding to those described above with reference to the embodiment illustrated in figures 1-5 are indicated with the same reference numeral.

Figure 11a illustrates in particular an embodiment of the control device 1 of the present invention wherein the coupling between the element 70, in which the lower portion 22 and the intermediate portion 23 of the inner side wall 5 of the main body 2 are defined, and the main body 2 takes place at respective coupling surfaces having a matching shape. The two coupling surfaces are kept in abutment against one another by the outer coating sheath G. In the illustrated example, the angle of inclination α is substantially equal to 40°, but obviously the value of such an angle can be anything within the range between 20° and 60°.

Figure 11b, on the other hand, illustrates an embodiment of the control device 1 of the present invention wherein the coupling between the element 70, in which the lower portion 22 and the intermediate portion 23 of the inner side wall 5 of the main body 2 are defined, and the main body 2 is a snap coupling. In the illustrated example, the angle of inclination α is substantially equal to 60°, but obviously the value of such an angle can be anything within the range between 20° and 60°.

Figure 11c illustrates a further embodiment of the control device 1 of the present invention wherein the coupling between the element 70, in which the lower portion 22 and the intermediate portion 23 of the inner side wall 5 of the main body 2 are defined, and the main body 2 takes place through screws 71. In the illustrated example, the angle of inclination α is substantially equal to 20°, but obviously the value of such an angle can be anything within the range between 20° and 60°.

In a further embodiment of the control device 1 of the present invention, or possibly also in the embodiments illustrated in figures 11a, 11b and 11c, between the coupling surfaces of the element 70 and of the main body 2 there can be an adhesive substance, like for example a glue.

The coupling between the element 70 and the main body 2 can therefore be removable. In this case, an adjustment member of the relative position between the element 70 and the main body 2 can be provided so as to adjust the relative position of these two elements as desired. For example, such an adjustment member comprises an adjustment screw associated, at one end thereof, with the main body and, at the opposite end thereof, with a female screw fixedly connected to the element 70. Alternatively, the screw can be associated with the element 70 and the female screw can be fixedly connected to the main body 2.

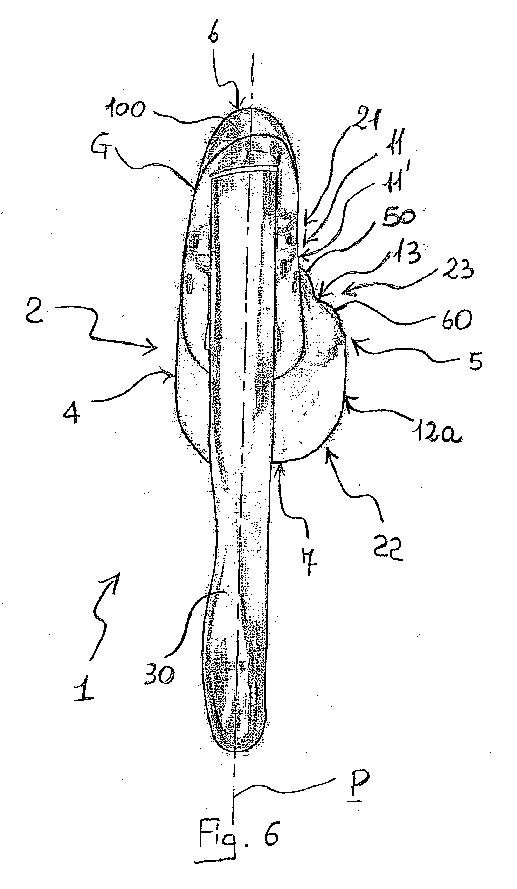

Figure 6 shows an alternative embodiment of the control device 1 of the present invention. In this figure, elements corresponding to those described above with reference to the embodiment illustrated in figures 1-5 are indicated with the same reference numeral.

The embodiment of figure 6 differs from the one illustrated in figures 1-5 only in that the inner side wall 5 of the main body 2 comprises a lower portion 22 the surface 12a of which, instead of being inclined with respect to the intermediate reference plane P as illustrated in figures 1-5, is substantially parallel to the intermediate reference plane P. Also in this case, however, the surface 12a of the lower portion 22 of the inner side wall 5 of the main body 2 has a distance from the intermediate reference plane P greater than the surface 11 of the upper portion 21 of the same inner side wall 5.

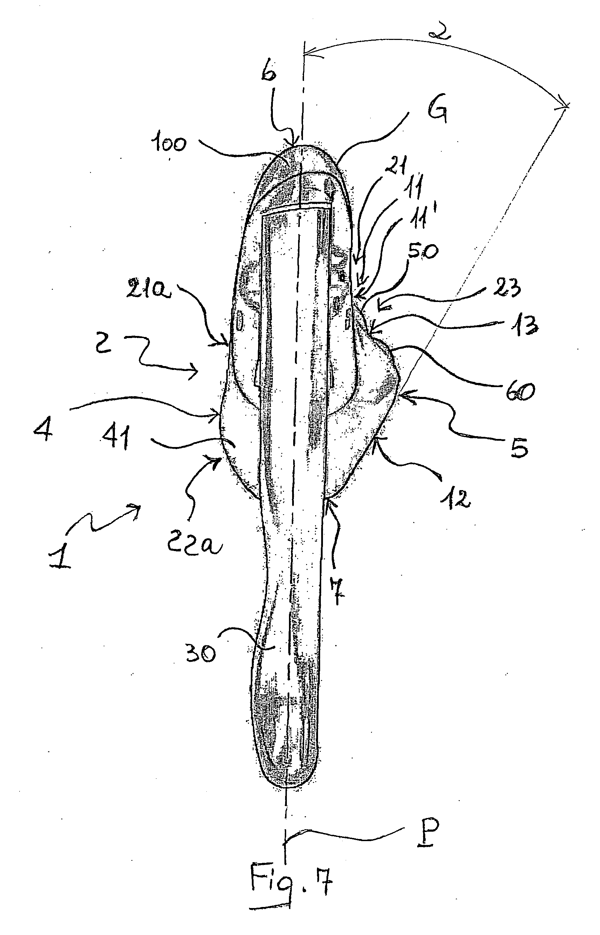

Figure 7 shows a further alternative embodiment of the control device 1 of the present invention. In this figure, elements corresponding to those described above with reference to the embodiment illustrated in figures 1-5 are indicated with the same reference numeral.

The embodiment of figure 7 differs from the one illustrated in figures 1-5 only in that the main body 2 comprises, in the lower portion 22a of the lower outer side wall 4, an enlargement 41 defined by a convexity of the outer side wall 4. The size of the enlargement 41 can obviously be different to the one illustrated in figure 7. Thanks to such an enlargement 41, the distance between the surface of the lower portion 22a of the outer side wall 4 and the intermediate reference plane P at the enlargement 41 is greater than the distance between the surface of the upper portion 21a of the outer side wall 4 and the intermediate reference plane P. The rest surface for the cyclist's hand is therefore larger than in devices of the prior art in which the outer side wall is parallel to the intermediate reference plane P along the entire extension thereof.

In an alternative embodiment, not illustrated, of the control device of the present invention, the surface of the lower portion of the inner side wall of the main body is parallel to the intermediate reference plane, whereas the surface of the lower portion of the outer side wall has an enlargement.

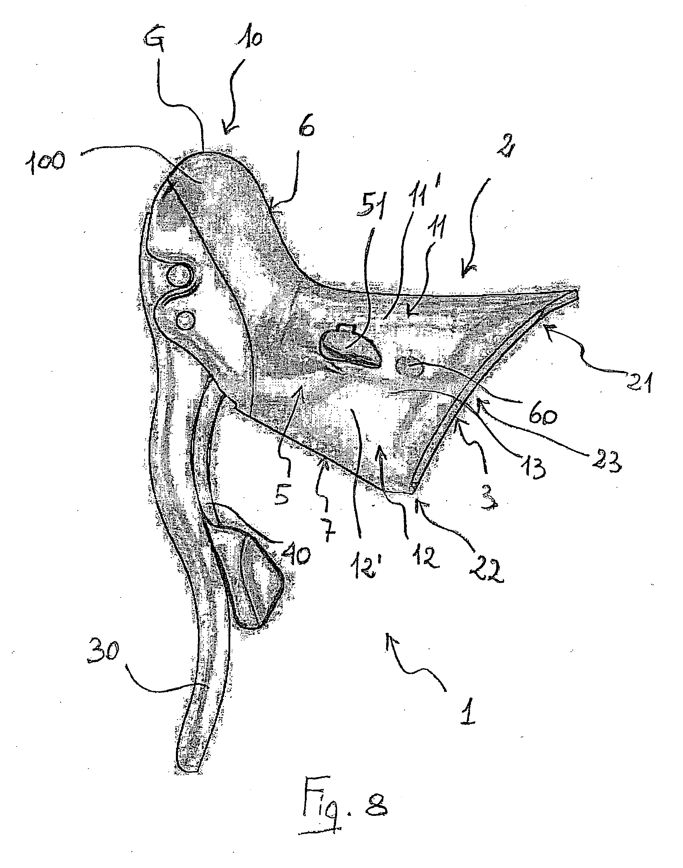

Figure 8 shows a further alternative embodiment of the control device 1 of the present invention. In this figure, elements corresponding to those described above with reference to the embodiment illustrated in figures 1-5 are indicated with the same reference numeral.

The embodiment of figure 8 differs from the one illustrated in figures 1-5 only in that the control device 1 has, instead of the button 50, a derailleur actuation lever 51. The lever 40 and the lever 51 in this case act upon a mechanical control device arranged inside the main body 2, as for example described in US 6,792,826 to the same Applicant, incorporated here by reference.

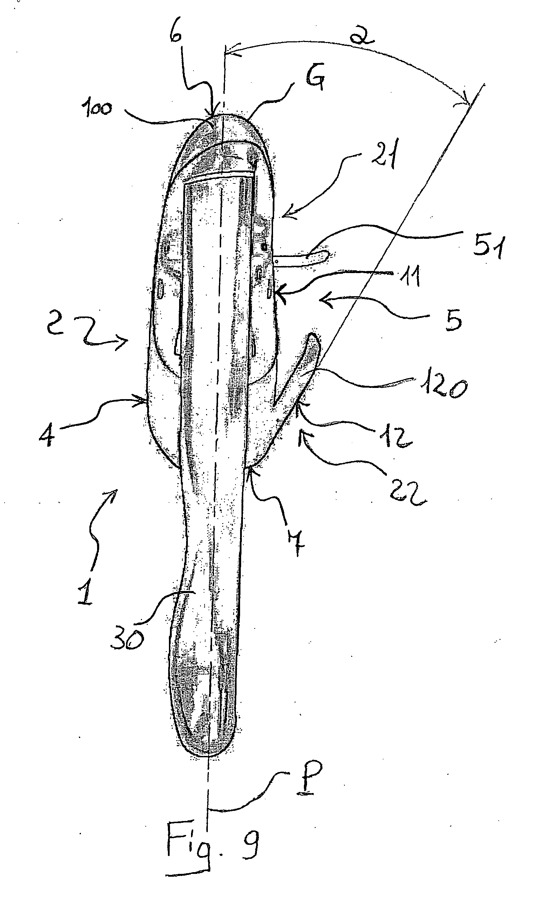

Figure 9 shows a further alternative embodiment of the control device 1 of the present invention. In this figure, elements corresponding to those described above with reference to the embodiment illustrated in figures 1-5 and 8 are indicated with the same reference numeral.

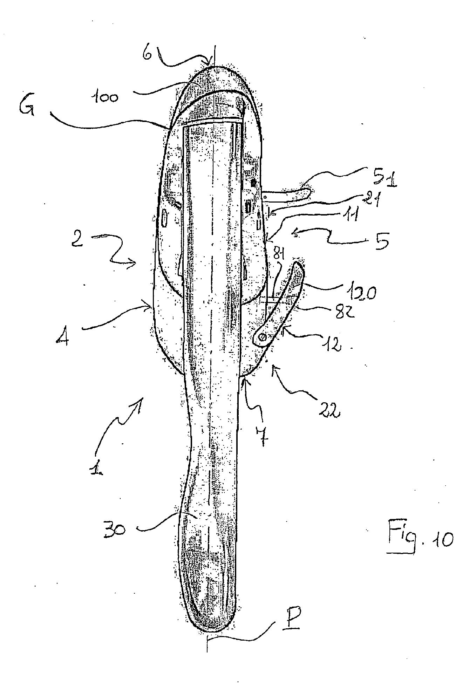

The embodiment of figure 9 differs from the one illustrated in figures 1-5 and 8 only in that the surface 12 of the lower portion 22 of the inner side wall 5 is defined on a finger rest element 120 associated with the lower part of the main body 2. The finger rest element 120 extends along a direction inclined by the angle α with respect to the intermediate reference plane P and is made in one piece with the main body 2. However, an alternative embodiment is provided, illustrated in figure 10, wherein the finger rest element 120 is made in a distinct piece from the main body 2 and is removably associated with the main body 2. As illustrated in figure 10, the control device 1 can in this case comprise an adjustment member of the inclination of the finger rest element 120 with respect to the main body 2. In the illustrated example, such an adjustment member comprises an adjustment screw 81 associated, at one end thereof, with the main body 2 and, at the opposite end thereof, with a female screw 82 fixedly connected to the finger rest element 120. Alternatively, the screw can be associated with the finger rest element 120 and the female screw 82 can be fixedly connected to the main body 2.

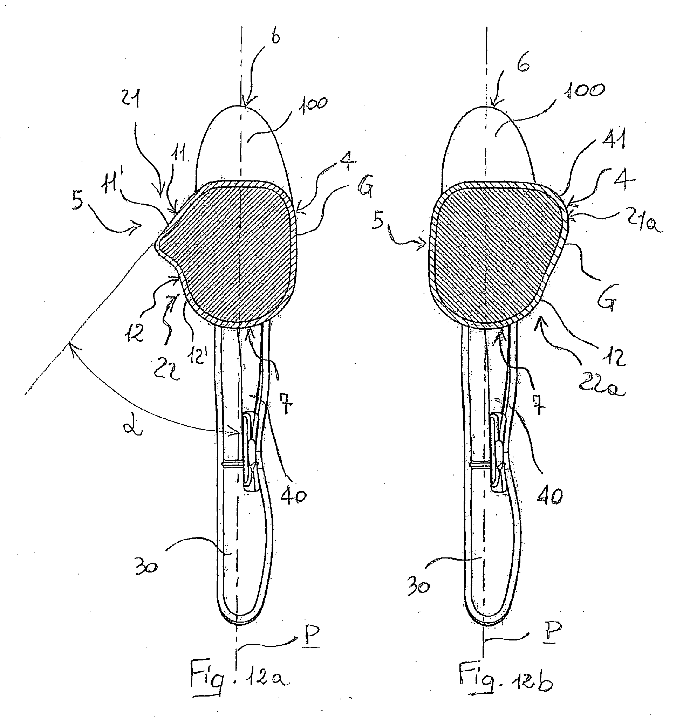

Figure 12a shows a further alternative embodiment of the control device 1 of the present invention. In this figure, elements corresponding to those described above with reference to the embodiment illustrated in figures 1-5 are indicated with the same reference numeral.

The embodiment of figure 12a differs from the one illustrated in figures 1-5 only in that in this embodiment the upper portion 21 of the inner side wall 5 is inclined by the angle α, so that an area 11' of the surface 11 thereof has a distance from the intermediate plane P greater than an area 12' of the surface 12 of the lower portion 22 of the inner side wall 5. In this case, the buttons 50 and 60 are provided on the upper portion 21.

Figure 12b shows a further alternative embodiment of the control device 1 of the present invention. In this figure, elements corresponding to those described above with reference to the embodiment illustrated in figures 1-5 are indicated with the same reference numeral.

The embodiment of figure 12b differs from the one illustrated in figures 1-5 in that in this embodiment the surface of the inner side wall 5 is substantially parallel to the intermediate reference plane P along the entire extension thereof, whereas the outer side wall 4 comprises an upper portion 21 the surface 11 of which has an enlargement 41 defined by a convexity. Also in this case, as in the embodiment of figure 7, the size of the enlargement 41 can be different to that illustrated in figure 12b. Thanks to such an enlargement 41, the distance between the surface of the upper portion 21a of the outer side wall 4 and the intermediate reference plane P at the enlargement 41 is greater than the distance between the surface of the lower portion 21a of the outer side wall 4 and the intermediate reference plane P.

The man skilled in the art shall recognise that it is possible to combine the various features of the embodiments described above to obtain further embodiments, all of which are in any case covered by the scope of protection of the present invention as defined by the subsequent claims.

The Applicant has also provided for the commercialisation of a kit of parts for the assembly of a control device 1 of the present invention. The kit comprises the main body 2 and a plurality (for example three) of elements 70, for example of the type illustrated in figures 11a, 11b and 11c, in which the inclination of the surface 12 of the lower portion 22 of an element 70 is different to that of another element 70. Such a kit is supplied to the cyclist to allow him to select the element 70 most suitable for the size of his hand. Of course, the elements 70 could have a surface 12a like that illustrated in figure 6, in which the distance of the surface 12a of the lower portion 22 of an element 70 from the intermediate reference plane P is different to that of the surface 12a of another element 70.

## Claims

1. Control device (1) for a bicycle, comprising a main body (2) adapted to be associated with a bicycle handlebar and at least one control member (30,31,40,50,51,52,60) of at least one bicycle equipment, said main body (2) comprising an outer side wall (4) and an inner side wall (5) arranged on the opposite side to said outer side wall (4) with respect to an intermediate reference plane (P), **characterised in that** at least one from said outer side wall (4) and said inner side wall (5) comprises a first portion (22) having a first surface (12) and a second portion (21) having a second surface (11), wherein said first surface (12) has at least one area (12') having a distance from said intermediate reference plane (P) greater than the distance between said intermediate reference plane (P) and an area (11') of said second surface (11).

2. Device according to claim 1, wherein said main body (2) comprises an intermediate surface (13) between the surface (12) of said first portion (22) of side wall (4,5) and the surface (11) of said second portion (21) of side wall (4,5).

3. Device (1) according to claim 2, wherein the surface (12) of said first portion (22) of side wall (4,5) and the intermediate surface (13) define an enlargement of the main body (2) having, in a direction from the bottom towards the top, an extension greater than the extension of the surface (11) of said second portion (21).

4. Device (1) according to any one of the previous claims, wherein said first portion (22) of side wall (4,5) is defined at a lower part of said main body (2) and said second portion (21) of side wall (4,5) is defined at an upper part of said main body (2).

5. Device (1) according to any one of the previous claims, wherein the surface (12) of said first portion (22) of side wall and the surface (11) of said second portion (22) of side wall are defined on said inner side wall (5) of said main body (2).

6. Device (1) according to any one of claims 1 to 4, wherein the surface (12) of said first portion (22) of side wall (4,5) and the surface (11) of said second portion (22) of side wall (4,5) are defined on said outer side wall (4) of said main body (2).

7. Device (1) according to any one of the previous claims, wherein the surface (12) of said first portion (22) of side wall (4,5) goes away from said intermediate reference plane (P) as one moves along the side wall (4,5).

8. Device (1) according to claim 7, wherein the surface (12) of said first portion (22) of side wall (4,5) is inclined by at least one predetermined angle (α) with respect to said intermediate reference plane (P).

9. Device (1) according to claim 8, wherein said at least one predetermined angle (α) is between 20° and 60°.

10. Device (1) according to claim 9, wherein said at least one predetermined angle (α) is between 30° and 50°.

11. Device (1) according to claim 10, wherein said at least one predetermined angle (α) is substantially equal to 40°.

12. Device (1) according to any one of claims 1 to 6, wherein the surface (12) of said first portion (22) of side wall (4,5) is substantially parallel to said intermediate reference plane (P).

13. Device (1) according to any one of claims 2 to 12, wherein said intermediate surface (13) goes towards said intermediate reference plane (P) as one moves along the side wall (4,5) from said first portion (22) to said second portion (21).

14. Device (1) according to any one of the previous claims, wherein said main body (2) comprises, on the opposite side to said first portion (22) of side wall (4,5) with respect to said intermediate reference plane (P), at least one enlargement (41).

15. Device (1) according to any one of the previous claims, wherein said first portion (22) of side wall (4,5) is made in one piece with said main body (2).

16. Device (1) according to any one of claims 1 to 14, wherein said first portion (22) of side wall (4,5) is made in a distinct piece from said main body (2).

17. Device (1) according to claim 16, wherein said first portion (22) of side wall (4,5) is removably associated with said main body (2).

18. Device (1) according to claim 16 or 17, wherein said first portion (22) of side wall (4,5) is associated by means of a snap coupling with said main body (2).

19. Device (1) according to claim 16 or 17, wherein said first portion (22) of side wall (4,5) is associated with said main body (2) through screws.

20. Device (1) according to claim 16 or 17, wherein said first portion (22) of side wall (4,5) is associated with said main body (2) through glue.

21. Device (1) according to claim 16 or 17, wherein said first portion (22) of side wall (4,5) is associated with said main body (2) at respective coupling surfaces having a matching shape and is kept in abutment against said main body (22) by an outer coating sheath.

22. Device (1) according to claim 16 or 17, wherein said first portion (22) of side wall (4,5) is able to be adjustably positioned with respect to said main body (2), said device comprising an adjustment member of the relative position between said first portion (22) of side wall (4,5) and said main body (2).

23. Device (1) according to any one of claims 1 to 14, wherein the surface (12) of said first portion (22) of side wall (4,5) is defined on a finger rest element (120) projecting canti-levered from said first portion (22) of side wall (4,5) ed inclined with respect to said intermediate reference plane (P) by a predetermined angle (α).

24. Device (1) according to claim 23, wherein said finger rest element (120) is made in one piece with said first portion (22) of side wall (4,5).

25. Device (1) according to claim 23, wherein said finger rest element (120) is made in a distinct piece from said first portion (22) of side wall (4,5).

26. Device (1) according to claim 25, wherein said finger rest element (120) is removably associated with said first portion (22) of side wall (4,5).

27. Device (1) according to claim 25 or 26, comprising an adjustment member of the angular position of said finger rest element (120) with respect to said intermediate reference plane (P).

28. Device (1) according to any one of the previous claims, wherein said at least one control member of at least one bicycle equipment comprises a brake actuation member (30,31).

29. Device (1) according to claim 28, wherein said brake actuation member comprises a brake cable actuation lever (30).

30. Device (1) according to any one of the previous claims, wherein said at least one control member of at least one bicycle equipment comprises a first member (40,52) for actuating a derailleur in a first gearshifting direction and a second member (50,51) for actuating the derailleur in a gearshifting direction opposite to said first gearshifting direction.

31. Device (1) according to claim 30, wherein said first and second derailleur actuation members comprise a derailleur actuation lever (40,51).

32. Device (1) according to claim 30, wherein said first and second derailleur actuation members comprise a derailleur actuation button (50,52).

33. Device (1) according to claim 30, wherein one from said first and second derailleur actuation members comprises a derailleur actuation lever (40) and the other from said first and second derailleur actuation members comprises a derailleur actuation button (50).

34. Device (1) according to any one of the previous claims, wherein said at least one control member of at least one bicycle equipment comprises at least one control member (60) of a cyclecomputer.

35. Device (1) according to claim 34, wherein said at least one cyclecomputer control member comprises at least one button (60) for interacting with the cyclecomputer.

36. Device (1) according to claim 32 or 33 and claim 35, wherein the first portion (22) of side wall (4,5) extends over said main body (2) for at least one portion of length (L) at least equal to the length of an area of the main body (2) comprising said derailleur actuation button (50) and said at least one button (60) for interacting with the cyclecomputer.

37. Device (1) according to claim 36, wherein the surface (12) of said first portion (22) of side wall (4,5) has, with respect to said intermediate reference plane (P), a first inclination at said derailleur actuation button (50) and a second inclination, different to said first inclination, at said at least one button (60) for interacting with the cyclecomputer.

38. Device (1) according to claim 37, wherein said first inclination is greater than said second inclination.

39. Bicycle comprising a control device (1) according to any one of the previous claims.

40. Kit of parts for the assembly of a control device (1) for a bicycle, comprising a main body (2) adapted to be associated with a bicycle handlebar and provided with at least one control member (30,31,40,50,51,52,60) of at least one bicycle equipment, and at least two finger rest elements (70,120) adapted to be selectively associated with said main body (2), wherein said at least two finger rest elements (70) each comprise a portion (22) of side wall (5) the surface (12) of which, when the finger rest element (70) is associated with said main body (2), has at least one area (12') having a distance from an intermediate reference plane (P) greater than the distance between the intermediate reference plane (P) and an area (11') of a surface (11) of a second portion (21) of said side wall (5), wherein said distance is different according to whether one finger rest element or another finger rest element of said at least two finger rest elements (70) is used.
